# EUROPÄISCHE PATENTANMELDUNG

(11) **EP 4 094 570 A1**
(43) Veröffentlichungstag der Anmeldung: **30.11.2022**
(21) Anmeldenummer: 21175787.7
(22) Anmeldetag: 25.05.2021
(51) Int. Cl.: A01G 13/06, F24B 5/02, F24H 9/02

(54) **HEIZVORRICHTUNG**

(71) Anmelder: Schafler-Zorn, Simon, 8181 St. Ruprecht an der Raab (AT); Schafler-Zorn, Philipp, 8181 St. Ruprecht an der Raab (AT); Pfeifer, Christian, 8181 St. Ruprecht an der Raab (AT)
(72) Erfinder: Schafler-Zorn, Simon, 8181 St. Ruprecht an der Raab (AT); Schafler-Zorn, Philipp, 8181 St. Ruprecht an der Raab (AT); Pfeifer, Christian, 8181 St. Ruprecht an der Raab (AT)
(74) Vertreter: Ellmeyer, Wolfgang

(57) **Zusammenfassung**

Heizvorrichtung (1) für den Außenbereich mit einer mit Brennmaterial befüllbaren Heizeinheit, die einen Heizkorpus (2), der einen Brennraum (3) begrenzt, und Lufteinlässe (40, 41, 42) zur Luftzufuhr in den Brennraum (3) umfasst, wobei
- der Heizkorpus (2) an seiner Oberseite eine Befüllöffnung (5) zum Befüllen mit Brennmaterial (6) aufweist, wobei im Betrieb das Brennmaterial (6) im oberen Bereich des Brennraumes (3) zündbar ist und das Verbrennen von oben nach unten erfolgt,
- die Lufteinlässe (40, 41, 42) in vertikalen Reihen angeordnet sind, wobei zumindest eine Lufteinlassreihe (50, 51) an der Vorderseite (7) des Heizkorpus (2) und zumindest eine Lufteinlassreihe (52) an der Rückseite (8) angeordnet sind, und
- die zumindest eine Lufteinlassreihe (51, 52) der Vorderseite (7) und die zumindest eine Lufteinlassreihe (52) der Rückseite (8) in der Höhe versetzt angeordnet sind.

## Beschreibung

Die Erfindung betrifft eine Heizvorrichtung für den Außenbereich mit einer mit Brennmaterial befüllbaren Heizeinheit, die einen Heizkorpus, der einen Brennraum begrenzt, und Lufteinlässe zur Luftzufuhr in den Brennraum umfasst.

Heizvorrichtungen für den Außenbereich haben eine Vielzahl von Anwendungen, von denen nachfolgend einzelne Anwendungsfälle beschrieben sind, die jedoch keinerlei Einschränkung des Schutzbereiches der Erfindung darstellen.

So sind etwa derartige Heizvorrichtungen bekannt, die im Agrarbereich eingesetzt werden.

Die durch den allgemeinen Klimawandel bedingten Wetterkapriolen haben für viele Landwirte drastische Folgen, da es immer öfter zu Spätfrost kommt, der einen enormen Einfluss auf den Ernteerfolg haben kann und damit immer öfter Maßnahmen getroffen werden müssen, um die Auswirkungen von Kälteeinbrüchen im Frühjahr insbesondere auf Blüten im Wein- und Obstbau abzuschwächen.

Zugleich gibt es naturgemäß Bestrebungen, zu diesem Zweck eingesetzte Frostschutzvorrichtungen möglichst energieeffizient, CO2-neutral und autark zu betreiben.

Bisher angewendete Schutzmaßnahmen, wie Überdachung, Frostschutzberegnung oder Warmluftzufuhr durch Gebläse oder ähnliches sind jedoch kosten- und arbeitsintensiv als auch zum Teil genehmigungspflichtig. In kleineren Anlagen, bei schwierigem Gelände und fehlender Anbindung an Versorgungsmöglichkeiten sind eine Reihe der bekannten Frostschutzmaßnahmen oftmals nicht praxistauglich bzw. nicht wirtschaftlich realisierbar.

Auch sind bekannte Frostschutzvorrichtungen im Aufbau sehr kompliziert, in der Anschaffung sehr teuer oder durch technische Nachteile relativ ineffizient. Dies ist oftmals darauf zurückzuführen, dass ein hoher Anteil an Wärmeenergie nach oben entweicht. Petrochemische Brennstoffe verursachen wiederum schädliche Abgase sowie Restmüll durch nicht wiederverwendbares Blechgebinde.

Weitere Einsatzmöglichkeiten für gattungsgemäße Heizvorrichtungen sind z.B. Terrassen- oder Balkonheizungen oder Heizungen für Gastgärten. Grundsätzlich bestehen jedoch hinsichtlich der Anwendung keine Einschränkungen.

Aufgabe der vorliegenden Erfindung ist es, eine Heizvorrichtung für den Außenbereich der eingangs genannten Art zu schaffen, die eine kostengünstige Herstellung, eine kurze Montagezeit und einen kostengünstigen Betrieb ermöglicht.

Zugleich ist es Aufgabe, eine Heizvorrichtung anzugeben, die einen hohen Wirkungsgrad, eine hohe Brenndauer sowie hohe Funktionssicherheit aufweist und die Vermeidung von schädlichen Abgasen, großen Brennrückständen und Restmüll ermöglicht.

Weitere Aufgabe ist es, eine Heizvorrichtung bereitzustellen, die eine Abgabe der erzeugten Wärmeenergie in Richtung nach oben möglichst gering hält.

Erfindungsgemäß wird dies dadurch erzielt,
- dass der Heizkorpus an seiner Oberseite eine Befüllöffnung zum Befüllen mit Brennmaterial aufweist, wobei im Betrieb das Brennmaterial im oberen Bereich des Brennraumes zündbar ist und das Verbrennen von oben nach unten erfolgt,
- dass die Lufteinlässe in vertikalen Reihen angeordnet sind, wobei zumindest eine Lufteinlassreihe an der Vorderseite des Heizkorpus und zumindest eine Lufteinlassreihe an der Rückseite angeordnet sind, und
- dass die zumindest eine Lufteinlassreihe der Vorderseite und die zumindest eine Lufteinlassreihe der Rückseite in der Höhe versetzt angeordnet sind.

Durch die erfindungsgemäße Bauform wird ein Abbrand nur von oben ermöglicht, wodurch immer nur eine obere Schicht des im Heizkorpus vorhandenen Brennmaterials den Verbrennungsgasen ausgesetzt ist, sodass eine unkontrollierte Verbrennung vermieden wird. Hingegen wäre bei einem Abbrand von unten das oberhalb des verbrennenden Brennmaterials aufgeschichtete Material der Wärmeentwicklung ausgesetzt, wodurch sich mit der Zeit starke Gasbildung und eine Verstopfung des Heizkorpus einstellen kann. Durch die auf der Vorder- und Rückseite angeordneten, in der Höhe versetzten Lufteinlassreihen wird für das von oben nach unten abbrennende Material stets eine ausreichende Luftzufuhr zur Verfügung gestellt, sodass es zu einer relativ geringen Gasfreisetzung und einem sehr gleichmäßigen Brennvorgang kommt. Auch der Anzündvorgang von oben kann einfach und sicher erfolgen, da das angezündete Brennmaterial an seiner Oberseite nur mit Luft in Kontakt ist und kein darüber liegendes Material die Sauerstoffzufuhr beeinträchtigt. Ein Erlöschen der Flamme zum Zeitpunkt des Anzündens oder danach wird dadurch verhindert.

Der Heizkorpus ist so aufgebaut, dass seine Vorderseite und seine Rückseite, die maßgeblichen Flächenanteile zum Abgeben der Wärme gleichmäßig und horizontal nach außen ausbilden, während an den Schmalseiten bevorzugt nur ein geringer Flächenanteil dafür vorgesehen ist.

Das Entzünden des im Heizkorpus eingefüllten Brennmaterials an seiner Oberseite hat zur Folge, dass Luft über die Lufteinlässe an der Vorderseite und an der Rückseite angesaugt wird, um der Verbrennung zugeführt zu werden und danach die Verbrennungsgase nach oben entweichen. Die im Bereich des brennenden Brennmaterialvolumens angeordneten Lufteinlässe werden jeweils den größten Anteil an Luftzufuhr beitragen im Vergleich zu weiter unten angeordneten Lufteinlässen, wo der Luftstrom durch aufgestapeltes Brennmaterial behindert wird. Mit der Zeit brennt das Material ab, sodass die sich ausbildende Glutzone innerhalb des Heizkorpus stetig nach unten wandert, wobei dann weiter unten angeordnete Lufteinlässe an der Vorderseite und der Rückseite, die gerade auf gleicher Höhe wie die Brennzone liegen, die Hauptluftzufuhr übernehmen. Durch geeignete Wahl des Brennmaterials können die Brennrückstände wie Asche sehr klein gehalten werden und es können besonders umweltfreundliche, nachwachsende Rohstoffe zum Einsatz gelangen.

Die Anzahl der Lufteinlässe an der Vorderseite und der Rückseite bzw. der Abstand zwischen den Lufteinlässen sowie die Größe der Lufteinlässe unterliegen im Rahmen der Erfindung keiner Einschränkung und können den jeweiligen Bedürfnissen angepasst bzw. optimiert werden. Durch Wahl der Dimensionen des Heizkorpus, insbesonders Brennraumhöhe, der Anzahl, Form und Größe sowie Anordnung der Lufteinlässe, somit Lufteinlassgesamtfläche kann das Abbrennverhalten hinsichtlich Dauer des Abbrandes, Wärmeentwicklung und Abstrahlungsrichtung entsprechend variiert und eingestellt werden. Es sind somit keine Regelvorrichtungen, händisch oder automatisch verstellbare Luftklappen erforderlich, um einen hohen Wirkungsgrad und lange Brennzeiten zu gewährleisten.

Gemäß einer weiteren Ausbildung der Erfindung kann das Ausmaß v der Höhenversetzung im Wesentlichen gleich dem halben Abstand a zwischen den Lufteinlässen der Lufteinlassreihen sein, woraus sich eine gleichmäßige Beabstandung zwischen den Lufteinlässen der Vorderseite und den Lufteinlässen der Rückseite ergibt, wodurch ein mit dem Verbrennungsvorgang fortschreitender gleichmäßiger Abbrand erfolgt.

Auch die Anzahl von nebeneinander angeordneten Lufteinlassreihen an der Vorder- und Rückseite unterliegt keinerlei Einschränkungen.

Gemäß einem Ausführungsbeispiel der Erfindung kann vorgesehen sein, dass an der Vorderseite des Heizkorpus zwei Lufteinlassreihen und an der Rückseite des Heizkorpus eine Lufteinlassreihe ausgebildet sind.

Als besonders vorteilhaft hat sich dabei herausgestellt, wenn in weiterer Ausbildung der Erfindung die eine Lufteinlassreihe der Rückseite mittig zwischen den zwei Lufteinlassreihen der Vorderseite angeordnet ist.

Beispielsweise bei einer Anwendung der erfindungsgemäßen Heizvorrichtung als Frostschutzvorrichtung wird eine möglichst lange Brenndauer angestrebt, z.B. während der Nacht, während der die Heizvorrichtung ohne Beaufsichtigung oder Nachfüllen die ganze Zeit über gleichmäßige Wärme abgibt. In dieser Hinsicht als vorteilhaft hat sich eine schlanke Ausführung der Heizvorrichtung erwiesen, wobei gemäß einer weiteren Ausbildung der Erfindung der Heizkorpus einen im Wesentlichen rechteckförmigen Querschnitt aufweisen kann, und wobei das Verhältnis von Höhe h des Brennraums zu Brennraumquerschnitt q größer als 10, vorzugsweise größer als 50, ist.

Um die erfindungsgemäße Heizvorrichtung vor Umwelteinflüssen wie etwa Regen oder Schnee zu schützen und darüber hinaus eine bessere Wärmeableitung in horizontaler Richtung, z.B. in Richtung von zu schützenden Kulturen zu ermöglichen, kann in weiterer Fortbildung der Erfindung vorgesehen sein, dass der Heizkorpus an seiner Oberseite eine abnehmbare Abdeckung aufweist, wobei die abnehmbare Abdeckung durch Abstandhalter zur Oberkante des Heizkorpus derart beabstandet angeordnet ist, dass eine Abzugsöffnung zum Abziehen der Verbrennungsgase ausgebildet ist.

Auf diese Weise kann einerseits der Brennvorgang ungestört von äußeren Einflüssen ablaufen zugleich aber auch die erwünschte Wärmeabgabe in seitliche Richtung unterstützt werden, wodurch sich der Wirkungsgrad der erfindungsgemäßen Vorrichtung erhöht.

Ein weiterer Nachteil von bisher bekannten Außenbereich-Heizungen ist die Anbringung derselben im möglicherweise hügeligen Gelände, wo üblicherweise erst eine Standfläche geschaffen werden muss, um die Heizvorrichtung aufstellen zu können. Hier kann gemäß einem weiteren Ausführungsbeispiel der Erfindung vorgesehen sein, dass der Heizkorpus an einer im Boden verankerbaren Stütze befestigt ist, wodurch eine sichere und platzsparende Anbringung ermöglicht wird und auch das Kippen der erfindungsgemäßen Heizvorrichtung bei extremen Hangneigungen oder großen Windstärken ausgeschlossen wird. Damit kann eine Beschädigung der Heizvorrichtung oder auch der zu schützenden Kulturpflanzen, Plantagenelementen usw. verhindert werden.

Darüber hinaus kann in weiterer Ausbildung der Erfindung der Heizkorpus an der verankerbaren Stütze abnehmbar durch Formschluss befestigt sein, wobei der Heizkorpus eine Aufnahme aufweist, mit der der Heizkorpus auf die Stütze aufsetzbar ist. Durch die schraubenlose Befestigung wird das Aufstellen und Abbauen der erfindungsgemäßen Heizvorrichtung stark vereinfacht, sobald die entsprechenden Stützen im Boden bereits vorgesehen sind. Die Aufstellung kann auch durch nicht speziell ausgebildete Hilfskräfte erfolgen. Während der Warmwettersaison kann die erfindungsgemäße Heizvorrichtung, wenn sie nicht benötigt wird, sehr einfach abgenommen werden, und bei geeigneter schlanker Bauweise z.B. zwischen den Kulturpflanzen verwahrt werden, wo sie bei Pflegearbeiten für Mensch und Maschine nicht im Weg ist, sodass auf diese Weise Transportwege und Lagerfläche entfallen. Bei Herstellung der Heizvorrichtung in Leichtbauweise kann diese von einer einzigen Person allein ohne großen Arbeitsaufwand angebracht und entfernt werden.

Die Anbringung mittels verankerbarer Stütze schließt jedoch andere Anbringungsarten nicht aus, so können auch Standfüße an der Unterseite der erfindungsgemäßen Heizvorrichtung vorgesehen sein, wobei auch eine seitliche Fixierung der Heizvorrichtung über eine Stange oder ein Seil angebracht sein kann.

Die erfindungsgemäße Heizvorrichtung hat darüber hinaus den Vorteil eines sehr einfachen Aufbaus, der eine konstruktiv einfache Bauweise ermöglicht. Der Heizkorpus kann z.B. in Form eines in vertikaler Richtung ausgerichteten Rohrprofils ausgebildet sein, wodurch eine vorteilhafte schlanke Ausführung ermöglicht wird. Da keine Wärmespeicherung erforderlich ist, sondern die erzeugte Wärme unmittelbar nach außen abgegeben werden soll, kann auch auf Wärmespeicherelemente, z.B. aus Schamott, verzichtet werden und eben ein einfaches Rohrelement z.B. aus Metall verwendet werden, in dem die Lufteinlassreihen in erfindungsgemäßer Weise sehr einfach ausgebildet sein können. Da weder eine Ofentür noch unbedingt ein Rost erforderlich ist und die erfindungsgemäße Heizvorrichtung auf einfache Weise durch Befüllen des oben offenen Rohrelements von oben erfolgen kann, ist somit eine einfache Herstellung möglich. Weiters ergibt sich ein kostengünstiger Betrieb, da keine Verschleißteile vorliegen.

Um den Herstellungsvorgang der erfindungsgemäßen Heizvorrichtung noch weiter zu vereinfachen und kostengünstiger zu gestalten, kann gemäß einer weiteren Ausführungsform der Erfindung der Heizkorpus aus zumindest zwei Profilteilen zusammengesetzt sein, wobei ein C-förmiger Profilteil vorgesehen ist, welcher die Rückseite des Heizkorpus beinhaltet und ein Hut-Profilteil vorgesehen ist, welcher die Vorderseite des Heizkorpus beinhaltet, und wobei die zwei Profilteile an Längsseiten miteinander verbunden sind. Dies ermöglicht die einfache Herstellung aus z.B. Metallblech oder entsprechenden vorgeformten Metallprofilteilen.

Zum Zwecke der Verbesserung der ästhetischen Wirkung können in bekannter Weise Teile von Seitenwänden oder Seitenwände aus feuerfestem Glas vorgesehen sein, um die Möglichkeit einer Beobachtung des Abbrands vorzusehen. Gemäß dem Erfindungsprinzip sind dann die Lochreihen zumindest teilweise in der verwendeten Glasplatte ausgebildet, um die seitliche Luftzufuhr zu ermöglichen.

Besonders einfach ist die Befüllung der erfindungsgemäßen Heizvorrichtung von oben, wenn gemäß einer weiteren Ausbildung der Erfindung das Brennmaterial in Form von Holzpellets vorliegt, da mit diesen der Innenraum des Heizkorpus sehr gut ohne Leerstellen aufgefüllt werden kann. Insbesondere können Holzpellets auch gepumpt werden, falls ein entsprechender Vorratswagen mit Schlauch zur Verfügung steht. Das Brennmaterial kann auch in anderer Form vorliegen, wie Holzscheite, Holzabfall, Holzschnitzel etc. und ist nicht auf Holz allein beschränkt.

Es kann aber auch in weiterer Ausbildung der Erfindung vorgesehen sein, dass der Brennraum ein Volumen aufweist, das dem Inhalt eines Einheits-Sackes Pellets entspricht, sodass das Hilfspersonal einfach jeweils nur einen ganzen Sack dieses Brennmaterials von oben einfüllen kann.

Durch den z.B. mit Holzpellets erzielbaren fast vollständigen Abbrand fällt auch beim Verbrennungsvorgang sehr wenig Asche an, sodass gemäß einer weiteren Ausführungsform der Erfindung der Heizkorpus an seiner Unterseite im Wesentlichen geschlossen sein kann, wobei gegebenenfalls die Heizkorpusunterseite aus einer gelochten Platte oder einem Rost gebildet sein kann, um Asche abzuführen. Daher kann auch die Unterseite der erfindungsgemäßen Heizvorrichtung konstruktiv sehr einfach aufgebaut sein. Für den Verbrennungsvorgang müssen an der Unterseite keine Lufteinlässe vorgesehen sein.

Gemäß einer weiteren Variante der Erfindung können die Lufteinlässe kreisförmig sein, und der Durchmesser in einem Bereich 8 mm (Öffnungsfläche 50 mm2) bis 16 mm (Öffnungsfläche 200 mm2) liegen, oder die Lufteinlässe quadratisch sind und die Öffnungsfläche im Bereich von 200 mm2 bis 400 mm2 liegen. Die geometrische Form der Lufteinlässe unterliegt keinerlei Einschränkungen und ist hauptsächlich durch möglichst einfache Herstellungsweise bestimmt.

Wie bereits erwähnt, kann durch die Wahl der Größe der Lufteinlässe und ihren gegenseitigen Abstand eine Beeinflussung des Abbrandverhaltens erzielt werden.

Es hat sich dabei gemäß einem weiteren Ausführungsbeispiel der Erfindung als vorteilhaft herausgestellt, dass das Verhältnis von Abstand zwischen den Lufteinlässen und dem Durchmesser der Lufteinlässe von 0,8 bis 1,2 beträgt. Es kann dieses Verhältnis im Rahmen der Erfindung aber auch außerhalb der genannten Grenzen gewählt werden.

Die Erfindung betrifft weiters die Verwendung einer erfindungsgemäßen Heizvorrichtung als Frostschutzvorrichtung zum Schutz von Pflanzen gegen Auswirkungen von Kälte und Frost.

Die Erfindung betrifft weiters die Verwendung einer erfindungsgemäßen Heizvorrichtung als Terrassen-, Balkon- oder Gastgartenheizung.

Wie bereits erwähnt ergibt sich aus der Angabe dieser zwei Anwendungsfälle keine Beschränkung des Schutzbereiches der Erfindung, jegliche anderen Anwendungen sind in diesem enthalten.

Nachfolgend wird die Erfindung anhand der in den Zeichnungen dargestellten Ausführungsbeispiele eingehend erläutert. Es zeigt dabei
Fig.1, 2 und 3 eine Vorder-, Seiten- und Rückansicht einer Ausführungsform einer erfindungsgemäßen Heizvorrichtung;
Fig.4 einen Schnitt A-A durch eine Heizvorrichtung gemäß Fig.1 und
Fig.5 eine Draufsicht auf die Heizvorrichtung gemäß Fig.1.

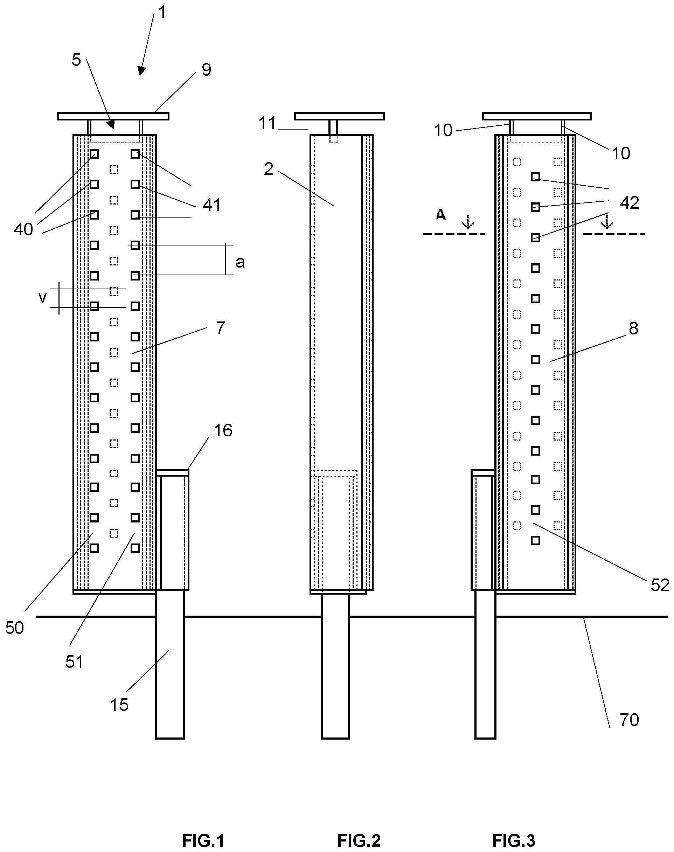

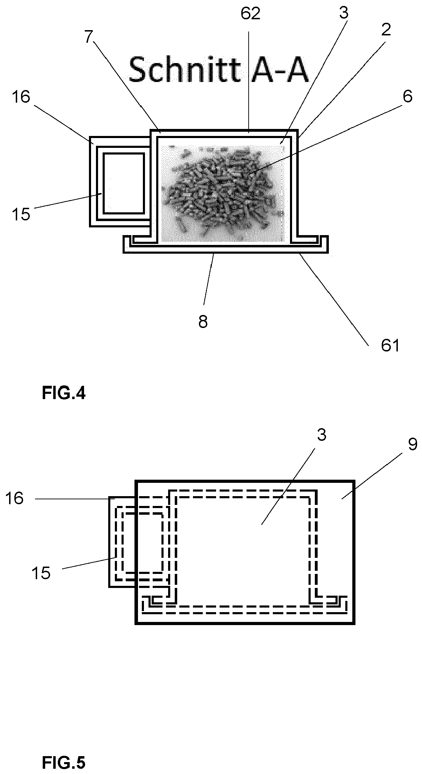

Fig.1, 2, 3, 4 und 5 zeigen eine Heizvorrichtung 1 für den Außenbereich, die eine mit Brennmaterial befüllbare Heizeinheit aufweist. Die Heizeinheit besteht aus einem einen Brennraum 3 (Fig.4) begrenzenden Heizkorpus 2 und Lufteinlässen 40, 41, 42, die der Luftzufuhr in den Brennraum 3 dienen.

Der Heizkorpus 2 weist an seiner Oberseite eine abnehmbare Abdeckung 9 auf, die durch Abstandhalter 10 zur Oberkante des Heizkorpus 2 derart beabstandet angeordnet ist, dass eine Abzugsöffnung 11 zum Abziehen der Verbrennungsgase ausgebildet ist. In der Praxis hat sich ein Abstand von z.B. 10 cm zwischen Oberkante des Heizkorpus 2 und der Abdeckung 9 als vorteilhaft erwiesen.

Der Heizkorpus 2 ist an einer im Boden 70 verankerten Stütze 15 befestigt, wobei der Heizkorpus 2 an der Stütze 15 abnehmbar durch Formschluss befestigt ist, und der Heizkorpus 2 eine Aufnahme 16 aufweist, mit der der Heizkorpus 2 auf die Stütze 15 aufsetzbar ist. Der Heizkorpus 2 ist in der in Fig.1 bis 5 gezeigten Gebrauchsstellung mit seiner Längsachse vertikal ausgerichtet.

Der Heizkorpus 2 ist an seiner Unterseite im Wesentlichen geschlossen. Die Heizkorpusunterseite kann aus einer gelochten Platte oder einem Rost gebildet sein, um Asche abzuführen.

Da als Brennmaterial bevorzugt Holzpellets eingesetzt werden, kann aber aufgrund der dabei sehr geringen Brennrückstände auch auf eine Lochplatte oder einen Rost verzichtet werden.

Erfindungsgemäß weist der Heizkorpus 2 an seiner Oberseite eine Befüllöffnung 5 zum Befüllen mit Brennmaterial 6 auf, die nach Abnehmen der Abdeckung 9 für den Befüllvorgang zugänglich wird, wobei im Betrieb das Brennmaterial 6 im oberen Bereich des Brennraumes 3 zündbar ist und das Verbrennen von oben nach unten erfolgt. Die Befüllöffnung 5 ist durch das obere offene Ende, z.B. Rohrende, des Heizkorpus 2 gebildet.

Als weitere erfindungsgemäße Maßnahme sind die Lufteinlässe 40, 41, 42 in vertikalen Reihen 50, 51, 52 angeordnet, die parallel zur Längsachse des Heizkorpus 2 verlaufen, wobei die Lufteinlässe 40, 41, 42 in einem Abstand a angeordnet sind (Fig.1) .

Im gezeigten Ausführungsbeispiel sind zwei Lufteinlassreihen 50, 51 an der Vorderseite 7 des Heizkorpus 2 und eine Lufteinlassreihe 52 an der Rückseite 8 angeordnet, wobei die eine Lufteinlassreihe 52 der Rückseite 8 mittig zwischen den zwei Lufteinlassreihen 50, 51 der Vorderseite 7 angeordnet ist. Die Anzahl der Lufteinlassreihen an der Vorder- und Rückseite ist im Rahmen der Erfindung nicht eingeschränkt und kann auch anders gewählt werden.

Weiters sind erfindungsgemäß die zwei Lufteinlassreihen 50, 51 der Vorderseite 7 und die Lufteinlassreihe 52 der Rückseite 8 in der Höhe versetzt angeordnet, wobei in Fig.1 das Ausmaß der Versetzung als v bezeichnet und in der Projektion von Vorderseite 7 und Rückseite 8 dargestellt ist. Durch die vorgesehene Versetzung v wird ein gleichmäßiger Abbrand sichergestellt.

Im gezeigten Ausführungsbeispiel ist das Ausmaß v der Höhenversetzung zwischen den Lufteinlassreihen 50, 51 der Vorderseite 7 und der Lufteinlassreihe 52 der Rückseite 8 im Wesentlichen gleich dem halben Abstand a zwischen den Lufteinlässen 40, 41, 42 der Lufteinlassreihen 51, 52, 53.

Die Versetzung v kann auch einen anderen Wert aufweisen, wobei a/2 einen sehr gleichmäßigen Abbrand sicherstellt.

Die Lufteinlässe 40, 41, 42 sind in Fig.1, 2 und 3 quadratisch z.B. 20 x 20 mm ausgeführt, woraus sich eine Öffnungsfläche von 400 mm2 ergibt. Die Lufteinlässe können aber bevorzugt auch kreisförmig sein, wobei der Durchmesser in einem Bereich von 8 mm (Öffnungsfläche 50 mm2) bis 16 mm (Öffnungsfläche 200 mm2) liegt, vorzugsweise 13 mm beträgt. Die angegebenen Bereiche stellen im Rahmen der Erfindung keine Einschränkung dar.

Eine bevorzugte Gesamtanzahl an Lufteinlässen 40, 41, 42 beträgt z.B. 38.

Das Verhältnis von Abstand a zwischen den Lufteinlässen 40, 41, 42 und dem Durchmesser/der Weite der Lufteinlässe beträgt vorzugsweise von 0,8 bis 1,2. Ein bevorzugter Abstand zwischen den Lufteinlässen 40, 41, 42 ist z.B. 12 cm.

Die Verwendung der erfindungsgemäßen Heizvorrichtung 1 kann in Form einer Frostschutzvorrichtung zum Schutz von Pflanzen gegen Auswirkungen von Kälte und Frost oder als Terrassen-, Balkon- oder Gastgartenheizung oder in anderer Weise erfolgen.

Der Heizkorpus 2 ist in einer schmalen, schlanken Bauart ausgeführt, wodurch er z.B. für den Frostschutz in Obstanbaugebieten sehr gut geeignet ist, da er aufgrund seiner Abmessungen einen langen Abbrand sicherstellt und auch wenig an Grundfläche in Anspruch nimmt, sodass er z.B. jeweils zwischen zwei Reben oder Bäumen aufgestellt werden kann.

Wie in Fig.4 gezeigt weist der Heizkorpus 2 einen im Wesentlichen rechteckförmigen, rohrförmigen Querschnitt auf, sodass an den Längsseiten des Querschnitts der Hauptanteil der Wärmestrahlung abgegeben wird, und der Heizkorpus 2 entsprechend positioniert werden kann, um hauptsächlich in Richtung der Längsseiten abzustrahlen. Die Form des Querschnitts ist im Rahmen der Erfindung jedoch nicht eingeschränkt und kann beliebig, z.B. oval ausgeführt sein.

Vorzugsweise ist das Verhältnis von Höhe h des Brennraums zu Brennraumquerschnitt q größer als 10, vorzugsweise größer als 50. Im gezeigten Ausführungsbeispiel ist die Höhe h mit 1,5m und der Brennraumquerschnitt 0,02 m2 mit 0,2m Breite (Vorderseite, Rückseite) und 0,1m Breite der Schmalseiten (links, rechts). Wie bereits erwähnt bestehen bei der Dimensionierung der Höhe und des Querschnitts im Rahmen der Erfindung keine Einschränkungen.

In Fig.4 ist gezeigt, dass der Heizkorpus 2 aus zwei Profilteilen zusammengesetzt ist, wobei ein C-förmiger Profilteil 61 vorgesehen ist, welcher die Rückseite 8 des Heizkorpus 2 beinhaltet und ein Hut-Profilteil 62 vorgesehen ist, welcher die Vorderseite 7 des Heizkorpus 2 beinhaltet, und wobei die zwei Profilteile 61, 62 an Längsseiten miteinander verbunden sind. Jegliche andere Form der Profilgestaltung ist aber im Rahmen der Erfindung möglich.

Zur Verwirklichung des erfindungsgemäßen Prinzips kann der Heizkorpus 2 auch in anderer Konstruktionsform ausgeführt sein und ist nicht auf die in den Fig.1 bis 5 gezeigte Bauweise beschränkt.

Die Aufnahme 16 für die Stütze 15 ist an der Schmalseite des Heizkorpus 2 befestigt. Zumindest Teile der Vorderseite 7 oder der Rückseite 8 können als wärmefeste transparente Glasplatte ausgeführt sein, um im Fall einer Terrassenheizung den Abbrandvorgang mitverfolgen zu können.

Fig.5 zeigt eine Draufsicht auf die erfindungsgemäße Heizvorrichtung, wobei die abnehmbare Abdeckung 9 den Brennraumquerschnitt vollständig abdeckt, um ihn vor Umwelteinflüssen zu schützen.

## Patentansprüche

1. Heizvorrichtung (1) für den Außenbereich mit einer mit Brennmaterial befüllbaren Heizeinheit, die einen Heizkorpus (2), der einen Brennraum (3) begrenzt, und Lufteinlässe (40, 41, 42) zur Luftzufuhr in den Brennraum (3) umfasst, **dadurch gekennzeichnet,**
- **dass** der Heizkorpus (2) an seiner Oberseite eine Befüllöffnung (5) zum Befüllen mit Brennmaterial (6) aufweist, wobei im Betrieb das Brennmaterial (6) im oberen Bereich des Brennraumes (3) zündbar ist und das Verbrennen von oben nach unten erfolgt,
- **dass** die Lufteinlässe (40, 41, 42) in vertikalen Reihen angeordnet sind, wobei zumindest eine Lufteinlassreihe (50, 51) an der Vorderseite (7) des Heizkorpus (2) und zumindest eine Lufteinlassreihe (52) an der Rückseite (8) angeordnet sind, und
- **dass** die zumindest eine Lufteinlassreihe (51, 52) der Vorderseite (7) und die zumindest eine Lufteinlassreihe (52) der Rückseite (8) in der Höhe versetzt angeordnet sind.

2. Heizvorrichtung nach Anspruch 1, **dadurch gekennzeichnet, dass** das Ausmaß v der Höhenversetzung im Wesentlichen gleich dem halben Abstand a zwischen den Lufteinlässen (40, 41, 42) der Lufteinlassreihen (50, 51, 52) ist.

3. Heizvorrichtung nach Anspruch 1 oder 2, **dadurch gekennzeichnet, dass** an der Vorderseite (7) des Heizkorpus (2) zwei Lufteinlassreihen (50, 51) und an der Rückseite (8) des Heizkorpus (2) eine Lufteinlassreihe (52) ausgebildet sind.

4. Heizvorrichtung nach Anspruch 3, **dadurch gekennzeichnet, dass** die eine Lufteinlassreihe (52) der Rückseite (8) mittig zwischen den zwei Lufteinlassreihen (50, 51) der Vorderseite (7) angeordnet ist.

5. Heizvorrichtung nach einem der Ansprüche 1 bis 4, **dadurch gekennzeichnet, dass** der Heizkorpus (2) einen im Wesentlichen rechteckförmigen Querschnitt aufweist, und dass das Verhältnis von Höhe h des Brennraums zu Brennraumquerschnitt q größer als 10, vorzugsweise größer als 50, ist.

6. Heizvorrichtung nach einem der Ansprüche 1 bis 5, **dadurch gekennzeichnet, dass** der Heizkorpus (2) an seiner Oberseite eine abnehmbare Abdeckung (9) aufweist, wobei die abnehmbare Abdeckung (9) durch Abstandhalter (10) zur Oberkante des Heizkorpus (2) derart beabstandet angeordnet ist, dass eine Abzugsöffnung (11) zum Abziehen der Verbrennungsgase ausgebildet ist.

7. Heizvorrichtung nach einem der Ansprüche 1 bis 6, **dadurch gekennzeichnet, dass** der Heizkorpus (2) an einer im Boden (70) verankerbaren Stütze (15) befestigt ist.

8. Heizvorrichtung nach Anspruch 7, **dadurch gekennzeichnet, dass** der Heizkorpus (2) an der verankerbaren Stütze (15) abnehmbar durch Formschluss befestigt ist, wobei der Heizkorpus (2) eine Aufnahme (16) aufweist, mit der der Heizkorpus (2) auf die Stütze (15) aufsetzbar ist.

9. Heizvorrichtung nach einem der Ansprüche 1 bis 8, **dadurch gekennzeichnet, dass** der Heizkorpus aus zumindest zwei Profilteilen zusammengesetzt ist, wobei ein C-förmiger Profilteil (61) vorgesehen ist, welcher die Rückseite (8) des Heizkorpus beinhaltet und ein Hut-Profilteil (62) vorgesehen ist, welcher die Vorderseite (7) des Heizkorpus beinhaltet, und wobei die zwei Profilteile (61, 62) an Längsseiten miteinander verbunden sind.

10. Heizvorrichtung nach einem der Ansprüche 1 bis 9, **dadurch gekennzeichnet, dass** der Heizkorpus an seiner Unterseite im Wesentlichen geschlossen ist, wobei die Heizkorpusunterseite aus einer gelochten Platte oder einem Rost gebildet sein kann, um Asche abzuführen.

11. Heizvorrichtung nach einem der vorhergehenden Ansprüche, dass das Brennmaterial Holzpellets sind.

12. Heizvorrichtung nach Anspruch 11, dass der Brennraum ein Volumen aufweist, das dem Inhalt eines Einheits-Sackes Pellets entspricht.

13. Heizvorrichtung nach einem der vorhergehenden Ansprüche, **dadurch gekennzeichnet, dass** die Lufteinlässe kreisförmig sind, und dass der Durchmesser in einem Bereich 8 mm (Öffnungsfläche 50 mm2) bis 16 mm (Öffnungsfläche 200 mm2) liegt, oder dass die Lufteinlässe quadratisch sind und die Öffnungsfläche im Bereich von 200 mm2 bis 400 mm2 liegt.

14. Heizvorrichtung nach einem der vorhergehenden Ansprüche, **dadurch gekennzeichnet, dass** das Verhältnis von Abstand zwischen den Lufteinlässen und dem Durchmesser der Lufteinlässe von 0,8 bis 1,2 beträgt.

15. Verwendung einer Heizvorrichtung nach einem der Ansprüche 1 bis 14 als Frostschutzvorrichtung zum Schutz von Pflanzen gegen Auswirkungen von Kälte und Frost.

16. Verwendung einer Heizvorrichtung nach einem der Ansprüche 1 bis 14 als Terrassen- oder Gastgartenheizung.
